# EUROPÄISCHE PATENTSCHRIFT

(11) **EP 2 930 059 B1**
(45) Veröffentlichungstag und Bekanntmachung des Hinweises auf die Patenterteilung: **04.12.2019**
(21) Anmeldenummer: 15162023.4
(22) Anmeldetag: 31.03.2015
(51) Int. Cl.: B60P 1/02

(54) **ABSENKBARER FAHRZEUGANHÄNGER**
LOWERABLE VEHICLE TRAILER
REMORQUE DE VÉHICULE ABAISSABLE

(30) Priorität: 07.04.2014 DE 202014101629 U
(43) Veröffentlichungstag der Anmeldung: 14.10.2015
(73) Patentinhaber: Humbaur Holding GmbH & Co. KG, 86368 Gersthofen (DE)
(72) Erfinder: Humbaur, Ulrich, 86368 Gersthofen (DE)
(74) Vertreter: Ernicke, Klaus Stefan

(56) Entgegenhaltungen:
- EP-A2- 0 895 881
- WO-A2-2013/086567
- DE-U1- 20 119 834
- FR-A1- 2 987 794
- FR-A1- 2 991 640
- US-A1- 2005 184 485
- US-B1- 7 401 804

## Beschreibung

Die Erfindung betrifft eine Schwenkachse, ein Chassis und einen damit ausgerüsteten absenkbaren Fahrzeuganhänger mit den Merkmalen der Ansprüche 1, 5 und 15.

Ein absenkbarer Fahrzeuganhänger ist aus der WO 2013/086567 A2 bekannt. Er weist ein Chassis mit Längsträgern und mit einer Schwenkachse auf, die mittels Achsböcken an der Unterseite der unterbrechungsfrei und ausschnittsfrei durchgehenden Längsträger befestigt ist.

Die FR 2 91 640 A1 und US 2005/0184485 A1 zeigen ähnliche absenkbare Fahrzeuganhänger mit einer Schwenkachse, die mittels Achsböcken an der Unterseite der unterbrechungsfrei und ausschnittsfrei durchgehenden Längsträger befestigt ist.

Fahrzeuganhänger ohne Absenkfunktion und ohne Schwenkachse sind aus der DE 40 31 007 A1, DE 201 19 834 U1 und DE 29 705 672 U1 bekannt. Die hier gezeigten Achsen sind starr mit den Längsträgern verbunden. Die Achsen haben schwenkbare und gefederte Radschwinghebel, die keine Absenkfunktion bewirken und auch keine Schwenkachse bilden. Die DE 29 705 672 U1 lehrt außerdem eine höhenverstellbare Achsbockbefestigung, die den Einsatz einer Einheitsachse und deren Anpassung an unterschiedliche Reifengrößen mit einer entsprechend unterschiedlich hohen Achsbockmontage ermöglicht. Hierdurch kann der Achswinkel bei unterschiedlichen Montagehöhen konstant gehalten werden.

Es ist Aufgabe der vorliegenden Erfindung, eine verbesserte Anhängertechnik aufzuzeigen.

Die Erfindung löst diese Aufgabe mit den Merkmalen im Hauptanspruch.
Der beanspruchte absenkbare Fahrzeuganhänger hat verschiedene Vorteile. Durch die Bolzen- insbesondere Schraubverbindungen können der Achsbock und der Längsträger lösbar und austauschbar verbunden werden. Eine Bolzen- oder Schraubverbindung ist außerdem zur Optimierung des Korrosionsschutzes und zur Vermeidung von Schweißverzügen von Vorteil. Schraubverbindungen erlauben ferner die Bildung von Bausätzen und die Montage von Chassis und Schwenkachse beim Händler oder beim Kunden. Eine Schraubverbindung ist auch für ein modulares Konzept und zur Bildung von Baureihen günstig, wobei die Schwenkachse und ihre Achsböcke mit unterschiedlichen Chassis kombiniert werden können, die für unterschiedliche Fahrzeuggrößen oder Traglasten ausgelegt sind. Insbesondere kann das komplette Chassis gebolzt, vorzugsweise geschraubt sein.

Die Anordnung der Achsböcke in Trägerausschnitten der Längsträger hat den Vorteil, dass Bauhöhe und Gewicht eingespart werden können. Andererseits wird die Bodenfreiheit des Fahrzeuganhängers in Fahrstellung verbessert und vergrößert.

Besonders günstig ist eine Schwenkachse, die einen über die Fahrzeugbreite durchgehenden Achskörper mit endseitigen Radschwinghebeln aufweist, wobei der Achskörper mittels einer Schwenkachse an den Achsböcken zwischen einer Fahrstellung und einer Absenkstellung drehbar gelagert ist. Bei der Drehung des Achskörpers ändern die Radschwinghebel ihre Ausrichtung, so dass die Fahrzeugräder und der Chassis relativ zueinander in der Höhe verstellbar sind. Die Schwenkachse kann eine bevorzugt hydraulische Betätigungseinrichtung und eine bevorzugt mechanische Verriegelung für die Fahrstellung aufweisen.

Die Schwenkachse besitzt einen Unterzug, der den Achskörper und den Achsbock untergreift und die Stabilität des Chassis erhöht. Der Unterzug schützt den Achskörper von unten und kann auch eine Stütz- und Auflagefläche in der Absenkstellung des Chassis bzw. des Fahrzeuganhängers bieten. Der Unterzug überspannt auch den Trägerausschnitt.

Der Achsbock kann platzsparend an einem Längsträger angeordnet sein. Er kann insbesondere in einer Profilöffnung eines als abgekantetes Trägerprofil ausgebildeten Längsträgers aufgenommen sein. Dies ist auch für die Stabilität und für die Schraubverbindung günstig. Der Trägerausschnitt kann an einem einteiligen und über den Achsbereich durchgehenden Längsträger angeordnet sein. Andererseits ist es möglich, einen Längsträger in vordere und hintere Längsträgerabschnitte zu unterteilen und diese mit der Vorder- und Hinterseite des Achsbockes durch Schrauben zu verbinden. Dies ist für ein Baureihen- oder Baukastensystem des Chassis von Vorteil. Die Längsträgerabschnitte können im Achsbereich voneinander getrennt und gegebenenfalls auch distanziert sein. Dank des Unterzugs besteht trotzdem die erforderliche mechanische Stabibilität des Chassis.

Der Achsbock ist zumindest bereichsweise, insbesondere an den axialen Enden, als hohles kastenförmiges Gehäuse ausgebildet. Dies ist für die Stabilität und für die Verbindung mit dem Unterzug und dem Längsträger bzw. den Längsträgerabschnitten von Vorteil. Außerdem kann im hohlen Gehäuse die Riegelmechanik geschützt untergebracht werden.

Der Achsbock kann beidseits des zentralen Schwenklagers nach unten offene Ausnehmungen aufweisen, in denen der Achskörper in den beiden Schwenkstellungen für Fahr- und Absenkstellung aufgenommen werden kann. Die Eintauchtiefe der Ausnehmungen und der Schwenkwinkel des Achskörpers können für günstige Höhenunterschiede zwischen Fahr- und Absenkstellung optimiert werden. Dies ist für eine große Bodenfreiheit einerseits und eine kleine Bauhöhe des Fahrzeuganhängers andererseits von Vorteil. Die potenzielle Schwächung des Achsbocks durch die Ausnehmungen wird durch den Unterzug ausgeglichen. Dieser kann einen Stützarm und eine Stützplatte aufweisen, die für eine optimale Stabilität sorgen und die mit unterschiedlichen Stellen des Längsträgers bzw. der Längsträgerabschnitte verbunden sein können und eine optimale Krafteinleitung und Trägerstabilisierung bewirken.

Durch die integrale Anordnung der Achsböcke an den Längsträgern bzw. deren Längsträgerabschnitten kann das Chassis an der Oberseite eine bevorzugt ebene Auflagefläche für den Aufbau bieten. Die Versteifung und Stabilisierung des Chassis mit Achskörper und Unterzug kann vollständig unterhalb der Auflagefläche stattfinden. Das Chassis mit der Schwenkachse ist als selbsttragende Konstruktion ausgeführt und bedarf keiner zusätzlichen Verbindung oder Befestigung an einem Aufbau des Fahrzeuganhängers. Andererseits schränkt das Chassis vorteilhafterweise auch den Aufbau insofern nicht ein. Er kann bedarfsweise auch seitlich ein kleines Stück über das Chassis hinausragen.

Die Erfindung betrifft auch eine Schwenkachse für einen Fahrzeuganhänger, der ein Chassis mit Längsträgern aufweist, wobei die Schwenkachse einen Achskörper mit Achsböcken zur Befestigung am Chassis aufweist. Diese Schwenkachse weist einen Unterzug auf, der den Achskörper und den Achsbock untergreift und der zur Befestigung an einem Längsträger eines Chassis vorgesehen und ausgebildet ist. Eine solche Schwenkachse mit Unterzug kann auch bei konventionellen Fahrzeuganhängern und Chassis eingesetzt werden, bei denen die Achsböcke nicht für eine Bolzenverbindung, insbesondere Schraubverbindung, mit den Längsträgern vorgesehen und ausgebildet sind, sondern auf andere Weise, z.B. durch eine Schweißverbindung, an den Längsträgern befestigt werden. Die Erfindung betrifft auch einen Fahrzeuganhänger, der mit einer solchen Schwenkachse mit Unterzug und beliebiger Achsbockbefestigung ausgerüstet ist.

Eine Ausgestaltung des beanspruchten Fahrzeuganhängers und seines beanspruchten Chassis sieht vor, dass die Längsträger bzw. die vorderen und hinteren Längsträgerabschnitte einen aufrechten Mittelsteg und einen oberen Quersteg sowie ggf. einen unteren Quersteg aufweisen.

Ferner ist in einer Ausgestaltung des beanspruchten Fahrzeuganhängers und seines beanspruchten Chassis vorgesehen, dass das Chassis eine Auflagefläche für einen Aufbau, insbesondere für dessen Grundrahmen, aufweist, die von der Oberseite der Längsträger, insbesondere von deren oberen Querstegen, gebildet wird.

In einer Ausführungsform des beanspruchten Fahrzeuganhängers und seines beanspruchten Chassis weist das Chassis eine starre Deichsel mit einer Anhängerkupplung und ggf. mit einer Bremseinrichtung auf.

Bei einer Ausgestaltung des beanspruchten Fahrzeuganhängers und seines beanspruchten Chassis weist das Chassis Längsträger und Querträger auf, die durch Bolzenverbindungen, insbesondere Schraubverbindungen, fest miteinander verbunden sind.

Die beanspruchten Schwenkachse weist in einer Ausführungsform einen Achskörper mit Fahrzeugrädern auf, der zwischen einer angehobenen Fahrstellung und einer Absenkstellung schwenkbar an den Achsböcken gelagert ist.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: einen absenkbaren Fahrzeuganhänger in einer perspektivischen Ansicht,
- Figur 2:: eine Variante des absenkbaren Fahrzeuganhängers mit einem anderen Aufbau und mit weg gelassenem Boden,
- Figur 3:: eine perspektivische Ansicht von Chassis und Schwenkachse des absenkbaren Fahrzeuganhängers von Figur 1 und 2,
- Figur 4 und 5:: abgebrochene und vergrößerte perspektivische innere Detailansichten von Chassis und Schwenkachse,
- Figur 6:: eine abgebrochene und vergrößerte äußere Detailansicht von Chassis und Schwenkachse,
- Figur 7:: eine abgebrochene perspektivische Detaildarstellung eines Achsbocks und eines Unterzugs,
- Figur 8:: eine innere abgebrochene perspektivische Detailansicht des Achskörpers der Schwenkachse,
- Figur 9:: eine perspektivische abgebrochene Ansicht von Chassis und Schwenkachse in einer Zwischenschwenkstellung,
- Figur 10:: eine andere Aufbauvariante des Fahrzeuganhängers,
- Figur 11:: den Fahrzeuganhänger in Senkstellung,
- Figur 12:: eine äußere Detailansicht der Schwenkachse in Senkstellung und
- Figur 13:: eine innere Detailansicht der Schwenkachse in Senkstellung.

Die Erfindung betrifft einen absenkbaren Fahrzeuganhänger (1) und dessen Komponenten, insbesondere dessen Chassis (3) und dessen Schwenkachse (4).

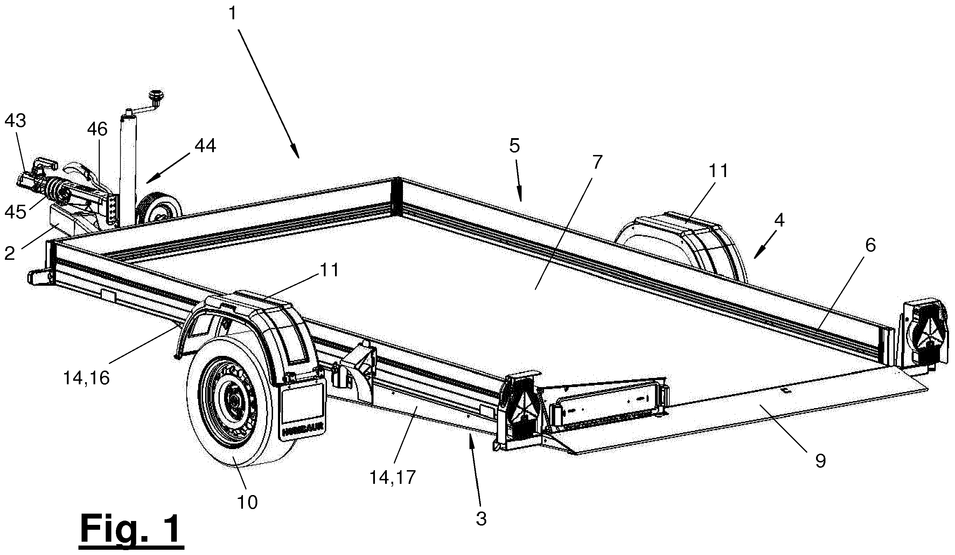

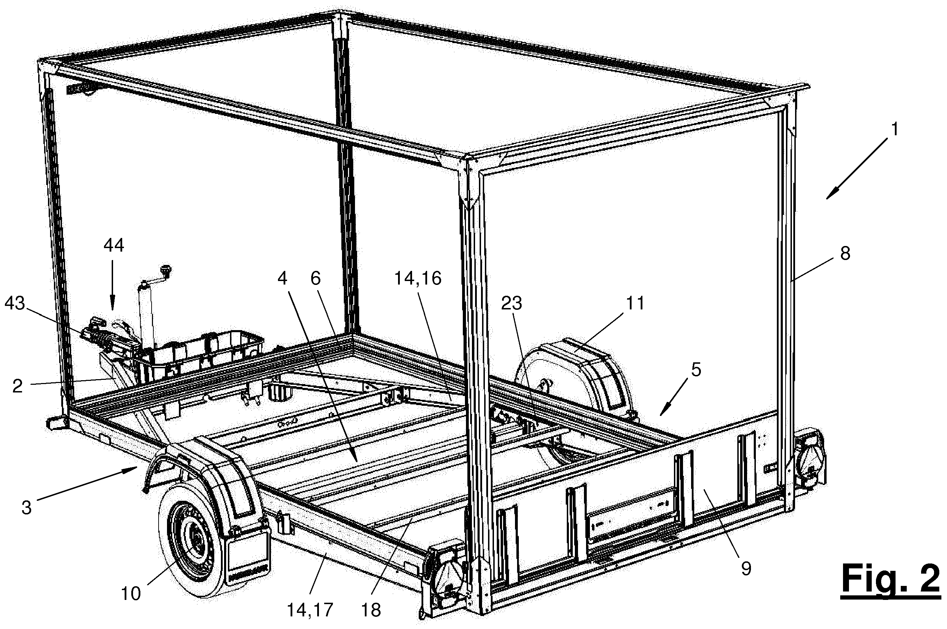

Figur 1, 2 und 10 zeigen einen absenkbaren Fahrzeuganhänger (1) mit einem Chassis (3), einer Schwenkachse (4) und einem Aufbau (5) in verschiedenen Aufbauvarianten. Der Aufbau (5) weist in den verschiedenen Ausführungsformen jeweils einen auf dem Chassis (3) angeordneten Grundrahmen (6) auf, der mehrere miteinander verbundene Rahmenprofile aufweist, die an der Frontseite und den beiden Längsseiten des Chassis (3) angeordnet sind. Am Grundrahmen (6) ist ein Boden (7) aufgenommen und abgestützt. Figur 2 zeigt den Aufbau (5) ohne Boden. Der Aufbau (5) kann ferner ein Heckteil (9) aufweisen, das z.B. als feste keilförmige Rampe oder als schwenkbare Heckklappe oder in anderer geeigneter Weise ausgebildet ist. Am Heckbereich können außerdem die Beleuchtung und ein gegebenenfalls schwenkbarer Kennzeichenhalter angeordnet sein.

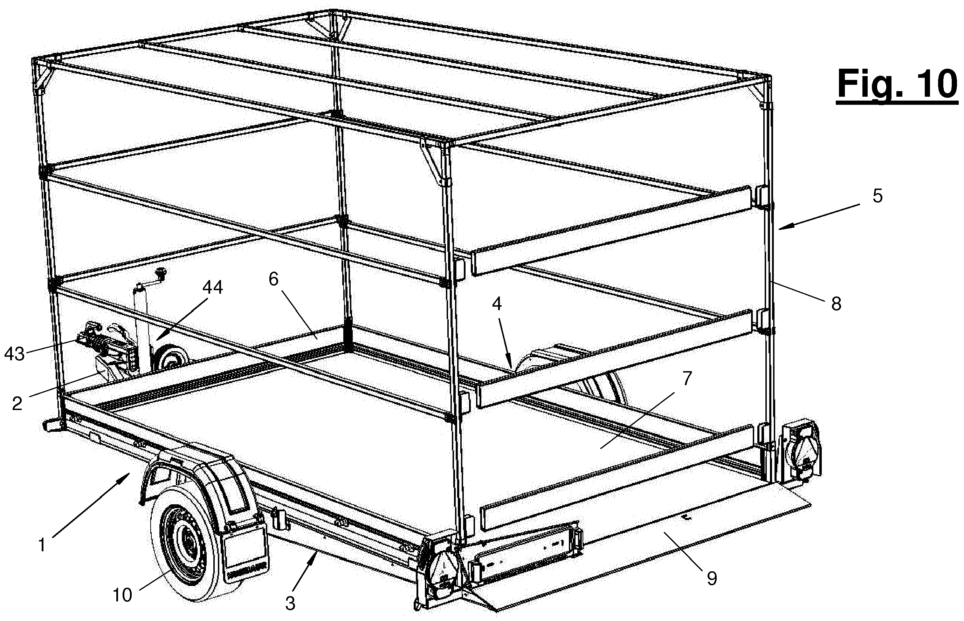

In Figur 1 ist der Aufbau (5) als Plattformaufbau mit einer durchgehenden Bodenplatte (7) dargestellt. Alternativ kann der Boden (7) als Strukturträger ausgebildet sein, der z.B. Stützschienen oder Stützträger für Fahrzeugräder aufweist. In den Varianten von Figur 2 und 10 weist der Aufbau (5) ein Gestell (8) auf, welches z.B. in der Variante von Figur 2 als Koffergestell mit nicht dargestellten Wand- und Dachpaneelen ausgebildet ist. Am Heck kann der Kofferaufbau eine Rückwandklappe oder Hecktüren aufweisen. In der Variante von Figur 10 ist ein Planengestell (8) dargestellt.

In einer anderen, nicht dargestellten Varianten kann der Aufbau (5) eine beliebige andere Form haben. Er kann z.B. als Koffer oder Kasten oder als gehäuseartiger Aufbau für einen einen Tiertransporter, insbesondere Pferdetransporter, ausgebildet sein. Andere Aufbauvarianten können Pritschen mit oder ohne Bordwände, Fahrzeugtransporter oder dgl. sein.

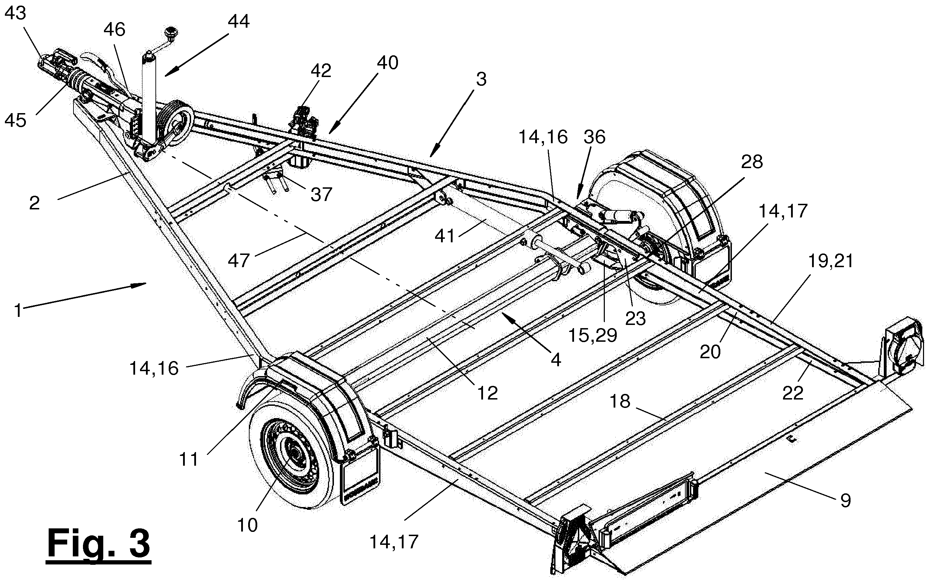

Die Ausbildung des Chassis (3) und der Schwenkachse (4) kann für alle Aufbauvarianten die Gleiche sein. Figur 3 zeigt eine perspektivische Draufsicht auf das Chassis (3) und die Schwenkachse (4).

Das Chassis (3) weist beidseitige Längsträger (14) auf. Zudem können ein oder mehrere Querträger (18) vorhanden sein, was allerdings nicht zwingend erforderlich ist. Das Chassis (3) hat frontseitig eine bevorzugt starre Deichsel (2), insbesondere V-Deichsel. Sie kann separat angeordnet und mit den Längsträgern (14) verbunden sein. In den gezeigten Ausführungsbeispielen gehen die Längsträger (14) in die schrägen Deichselarme der V-Deichsel über bzw. bilden diese.

Der Fahrzeuganhänger (1) ist als Straßenfahrzeug konzipiert und weist Räder (10) auf. Am vorderen Deichselende ist eine Anhängerkupplung (43) angeordnet, die bevorzugt als Kugelkopf-Anhängerkupplung ausgebildet ist.

Der Fahrzeuganhänger (1) bzw. das Chassis (3) kann mit einer Bremseinrichtung (44) ausgerüstet sein. Diese weist nicht näher dargestellte Radbremsen nebst Bremsanschluss (48) auf. Ferner sind eine Betriebsbremse (45), z.B. eine Auflaufbremse, und/oder eine Feststellbremse (46), insbesondere eine Handbremse, sowie ein Bremszug (47) zur Betätigung der Radbremsen vorhanden. Der Bremszug (47) ist bevorzugt mit Bowdenzügen ausgerüstet, die mit den Bremsanschlüssen (48) verbunden sind. An der Deichsel (2) kann ferner noch ein Stützrad fest oder abnehmbar angeordnet sein.

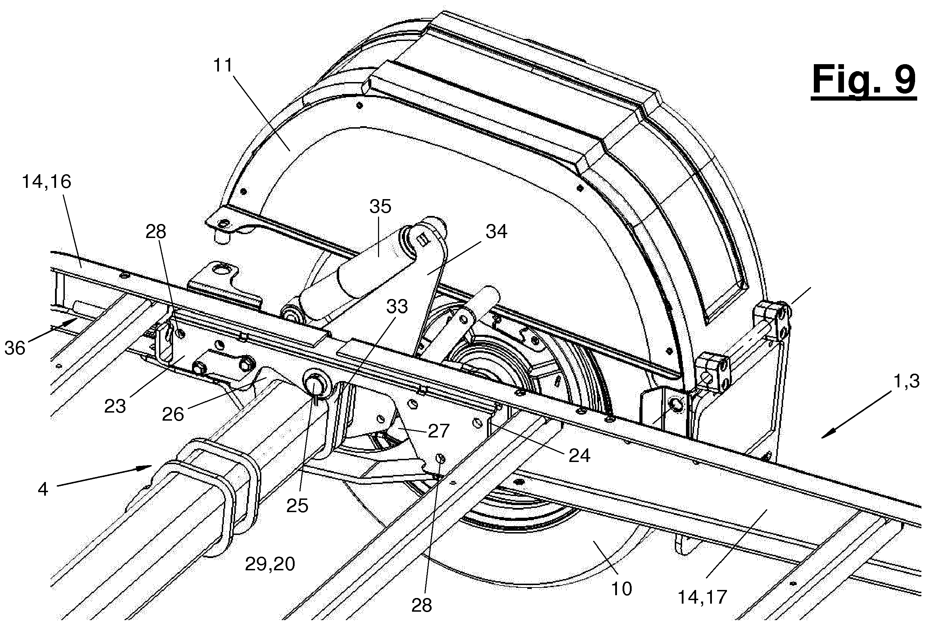

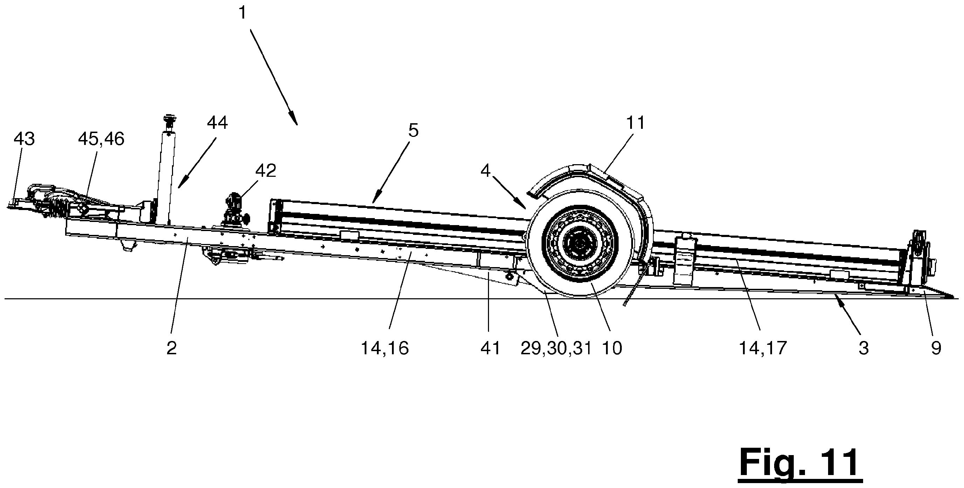

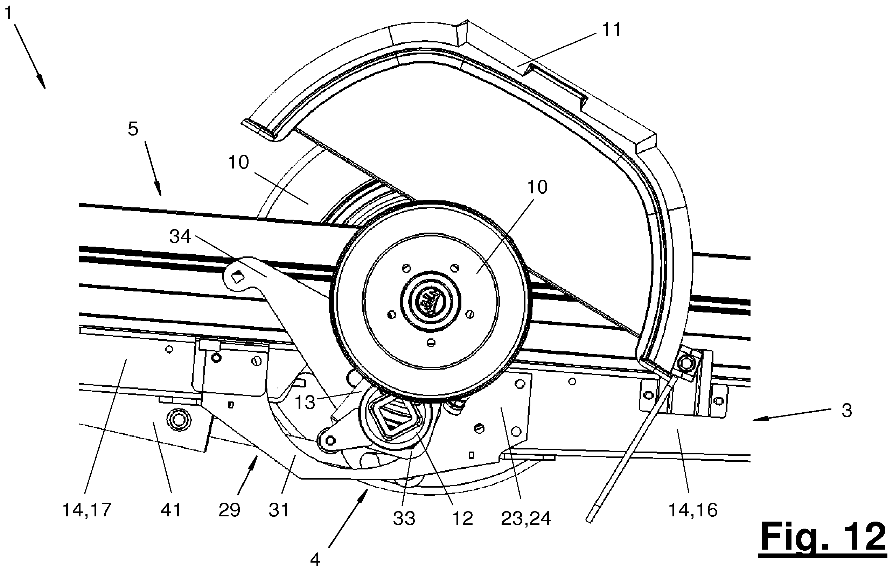

Bei dem absenkbaren Fahrzeuganhänger (1) können das Chassis (3) und der Aufbau (5) aus einer angehobenen Fahrstellung in eine Absenkstellung abgesenkt werden, in der das Heckteil (9) Bodenkontakt haben kann und das Be- und Entladen erleichtert ist. In den Figur 1 bis 8 ist die angehobene Fahrstellung dargestellt. Figur 9 zeigt eine Zwischenstellung. Figur 11, 12 und 13 zeigen die Senkstellung.

Das Heben und Senken wird mit der Schwenkachse (4) bewirkt. Diese weist in den gezeigten Ausführungsbeispielen einen über die Fahrzeugbreite durchgehenden Achskörper (12) mit endseitigen Radschwinghebeln (13) auf, an denen die Fahrzeugräder (10) mit Naben drehbar gelagert sind. Die Fahrzeugräder (10) sind von Kotflügeln (11) überdeckt, die sich beim Heben und Senken des Chassis (3) mitbewegen. Der Achskörper (12) ist bevorzugt als hohles Achsrohr einer Federachse, insbesondere Gummi- oder Torsionsfederachse, ausgebildet, in dem ein mit jeweils einem Radschwinghebel (13) verbundener Drehstab mit Gummischnüren oder Torsionsfederelementen angeordnet ist.

Die Schwenkachse (4) weist ferner Achsböcke (23) auf, die eine Befestigung am Chassis (3) ermöglichen. Die Befestigung erfolgt durch eine schweißfreie Bolzenverbindung (28), die bevorzugt als Schraubverbindung ausgebildet ist und die gegebenenfalls lösbar ist.

Alternativ kann eine Nietenverbindung oder eine andere Art von Bolzenverbindung (28) in fester oder lösbarer Ausbildung vorgesehen sein.

Die Achsböcke (23) sind an den Endbereichen des Achskörpers (12) vorgesehen und sind mit diesem jeweils über ein Schwenklager (25) verbunden. Die Schwenklager (25) sind oberhalb des Achskörpers (12) angeordnet und haben eine parallele Ausrichtung zu der Längsachse des Achskörpers (12). Die Schwenkachse (4) ist bevorzugt als Längslenkerachse ausgebildet und weist einen geraden Achskörper (12) und gerade Radschwinghebel (13) auf. An den Enden des Achskörpers (12) sind Achshalter (33) drehfest angeordnet, die z.B. als Ringschellen ausgebildet sind und an der Oberseite ein Lagerauge für die Aufnahme des durchgesteckten Lagerbolzens des Schwenklagers (25) aufweisen. Die Achshalter (33) sind zumindest bereichsweise im bevorzugt hohlen Achsbock (23) aufgenommen.

An den äußeren Ende des Achskörpers (12) und außerhalb des Chassis (3) sind Stützarme (34) drehfest angeordnet, die zur Aufnahme von einem Stoßdämpfer (35) dienen. Dieser ist an einem Ende mit dem Stützarm (34) und am anderen Ende mit einem rückwärtigen Fortsatz des Radschwinghebels (13) gelenkig verbunden.

Die Achsböcke (23) sind an den Längsträgern (14) jeweils in einem Trägerausschnitt (15) angeordnet. Die Achsböcke (23) erstrecken sich jeweils in Längsrichtung durch den Trägerausschnitt (15). Sie sind mit ihren Enden an den Längsträgern (14) durch die besagte schweißfreie Bolzenverbindung (28) bzw. die bevorzugte Schraubverbindung, an den Längsträgern (14) befestigt. Die Schwenkachse (4) weist ferner einen am Chassis (3) angeordneten und befestigten Unterzug (29) auf, der den Trägerausschnitt (15) stützend überspannt und den Achsbock (23) untergreift.

In den gezeigten Ausführungsformen sind die Längsträger (14) jeweils in einen vorderen Längsträgerabschnitt (16) und einen hinteren Längsträgerabschnitt (17) unterteilt. Die vorderen und hinteren Längsträgerabschnitte (16,17) sind dabei im Achsbereich voneinander axial distanziert angeordnet, wobei sie zwischen sich den Trägerausschnitt (15) bilden.

Die vorderen und hinteren Längsträgerabschnitte (16,17) sind jeweils an dem ihnen zugewandten Endbereich ihres Achsbocks (23) durch die Bolzenverbindung (28), insbesondere Schraubverbindung, befestigt. Die voneinander distanzierten vorderen und hinteren Längsträgerabschnitte (16,17) sind dabei jeweils durch den ihnen zugeordneten Achsbock (23) und den Unterzug (29) miteinander verbunden und mechanisch stabilisiert.

Die Längsträger (14) bzw. ihre Längsträgerabschnitte (16,17) sind als abgekantete Trägerprofile ausgebildet und bestehen vorzugsweise aus Metall, insbesondere aus Stahl. Die Trägerprofile weisen jeweils einen aufrechten Mittelsteg (20) und an dessen oberen Rand einen oberen Quersteg (21) auf. Zusätzlich kann am unteren Rand ein unterer Quersteg (22) angeordnet sein. Die Trägerprofile sind in den gezeigten und bevorzugten Ausführungsbeispielen als C-Profile ausgebildet, deren Querstege (21,22) zur Chassisinnenseite weisen und eine in gleiche Richtung weisende Profilöffnung bilden.

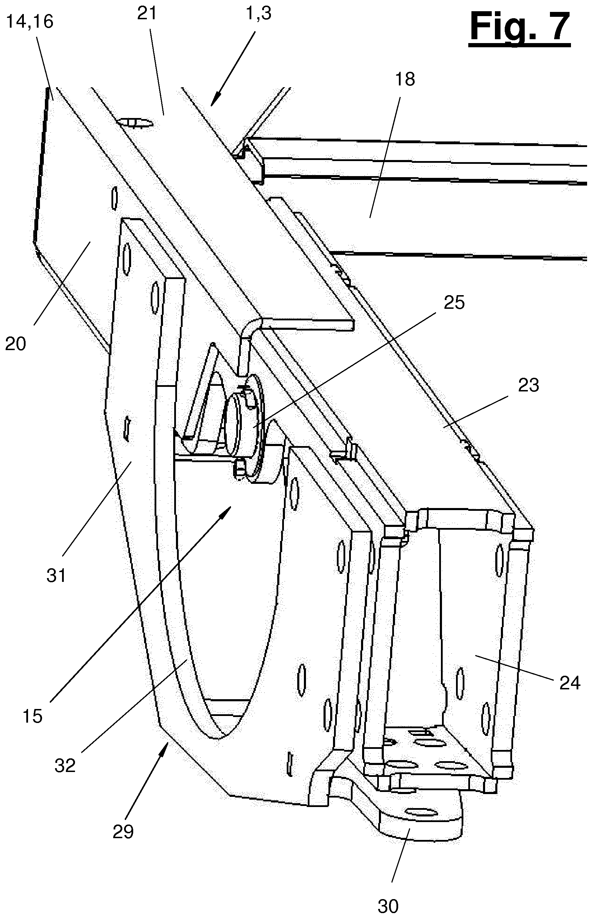

Die abgekanteten Trägerprofile nehmen den Achsbock (23) beidseits des Trägersausschnitts (15) in der Profilöffnung auf und umschließen den Achsbock (23) an mehreren Seiten, insbesondere an der Ober- und Unterseite sowie an der Außenseite. Dabei kann eine flächige Anlage und Führung bzw. Abstützung bestehen. Figur 7 zeigt diese Anordnung.

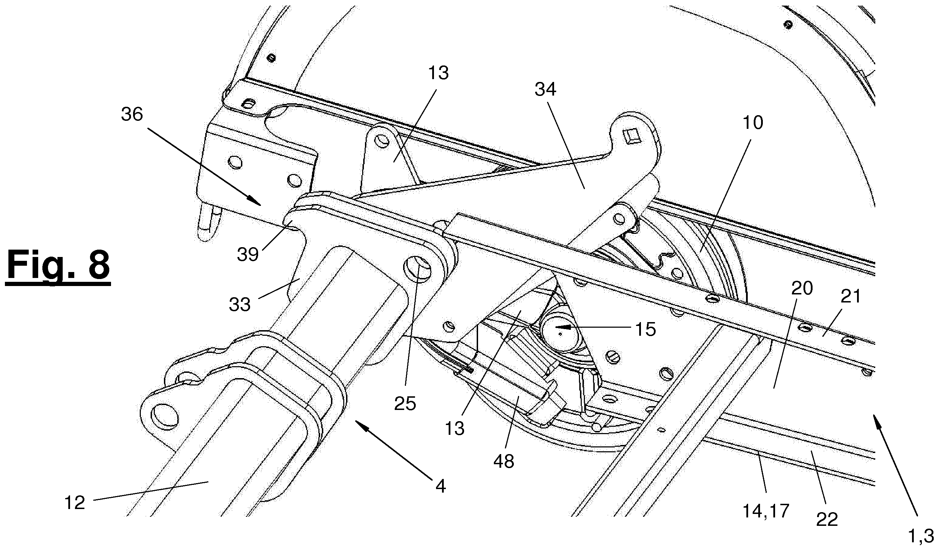

Zur Bildung eines Trägerausschnitts (15) können die Bestandteile der Trägerprofile in Axialrichtung unterschiedlich weit vorstehen. Wie z.B. Figur 8 verdeutlicht, kann ein Mittelsteg (20) am Rand zum Trägerausschnitt (15) angeschrägt sein, sodass der Trägerausschnitt (15) eine nach oben sich verjüngende konische Form hat. Der untere Querträger (22) endet am schrägen Rand des Mittelstegs (20), wobei der obere Querträger (21) axial darüber hinweg ragt und gemäß Figur 7 auf dem Achsbock (23) aufliegen kann. Figur 7 zeigt auch die abgekannte Trägerfront aus einem anderen Blickwinkel.

Wie Figur 2 und 3 verdeutlichen, weist das Chassis (3) an der Oberseite eine bevorzugt ebene Auflagefläche (19) für den Aufbau (5), insbesondere für dessen Grundrahmen (6) auf. Die Auflagefläche (19) wird von der Oberseite der Längsträger (14), insbesondere von deren oberen Querstegen (21) gebildet. Die Achsböcke (23) und die Unterzüge (29) befinden sich unterhalb der Auflagefläche (19). Sie ragen nicht über diese nach oben.

In Variation zu den gezeigten Ausführungsbeispielen können die Trägerprofile der Längsträger (14) bzw. ihrer Längsträgerabschnitte (16,17) ein anderes Querschnittsprofil, z.B. ein L-, Z-, T- oder I-Profil, aufweisen. Insbesondere kann ggf. der untere Quersteg (22) entfallen.

Die Querträger (18) können ebenfalls als Metallprofile, insbesondere Stahlprofile, ausgebildet sein. Sie können eine beliebig geeignete Querschnittsform haben. In den gezeigten Ausführungsbeispielen sind sie ebenfalls als C-Profile ausgebildet, wobei ihre Profilöffnung nach unten weist. Sie können an den freien Enden Ausklinkungen aufweisen, sodass ihre nach oben weisenden Mittelstege bündig an die oberen Querstege (21) anschließen und einen Bestandteil der Auflagefläche (19) bilden können.

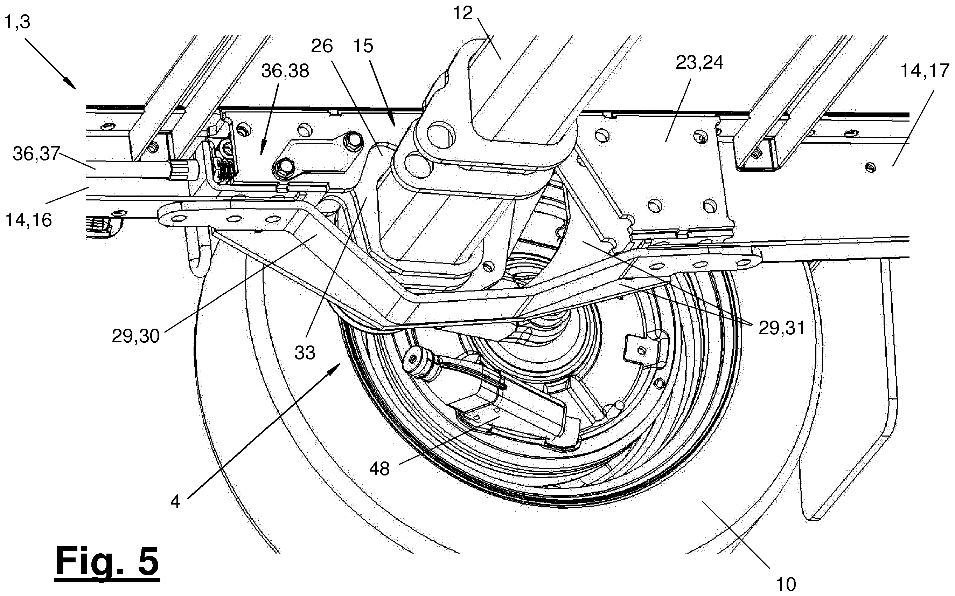

Wie Figur 5, 7 und 13 verdeutlichen, weisen die Achsböcke (23) jeweils ein kastenförmiges, hohles Gehäuse (24) auf. Der einzelne Achsbock (23) kann als Blechteil aus Metall, insbesondere Stahl, ausgebildet sein. Er kann z.B. als Biege- und Schweißteil oder als Schweißkonstruktion aus Einzelblechen ausgeführt sein. Alternativ sind andere Ausgestaltungen, z.B. als Gußteil, möglich.

Die Achsböcke (23) erstrecken sich quer zum Achskörper (12) und entlang der Chassislängsachse. An den axialen Enden weisen die Achsböcke (23) jeweils einen rechteckigen und umlaufend geschlossenen hohlen Gehäusebereich auf. Er dient Führungs- und Befestigungszwecken. In diesem Bereich befinden sich die Durchgangsöffnungen für die Bolzenverbindungen (28), vorzugsweise Schraubverbindungen. Der Achsbock (23), insbesondere seine geschlossenen Gehäusebereiche (24) liegen dabei einerseits mit der Außenseite plan am Mittelsteg (20) und mit der Unterseite plan auf dem unteren Quersteg (22) des Längsträgers (14) bzw. seiner Längsträgerabschnitte (16,17) auf und sind hier in der genannten Weise befestigt, insbesondere verschraubt.

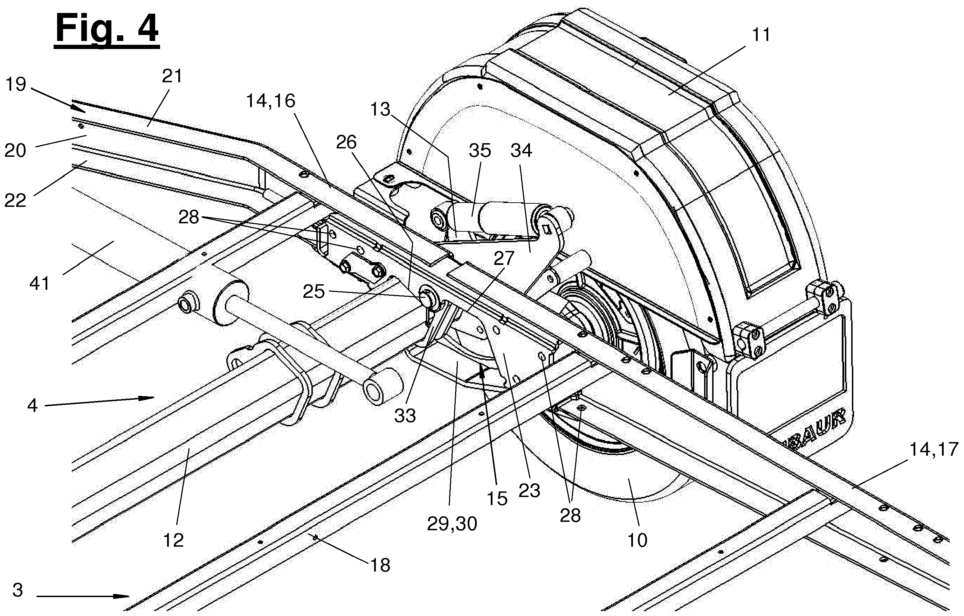

Im Bereich des Trägerausschnitts (15) und zwischen den vorgenannten rechteckigen Gehäusebereichen ist der Achsbock (23) bzw. das Gehäuse (24) nach unten offen und hat im Querschnitt eine U-Form. Wie Figur 4, 7 und 9 verdeutlichen, ist das Schwenklager (25) im mittleren Bereich der Längserstreckung des Achsbocks (23) angeordnet.

Beidseits des Schwenklagers (25) sind in Chassislängsrichtung gesehen eine vordere und eine hintere Ausnehmung (26,27) des Achsbocks (23) angeordnet. In den Ausnehmungen (26,27) wird der Achskörper (12) in den beiden Endstellungen von seiner Schwenkbewegung aufgenommen. Die Ausnehmungskonturen können entsprechend an die Außenkontur des Achskörpers (12) angepasst sein. Die Ausnehmungen (26,27) werden durch Ausschnitte in den Seitenwänden des Achsbocks (23) gebildet. Andererseits weisen die Seitenwände zwischen den Ausnehmungen (26,27) einen ausgebauchten Bereich mit Lageraugen für die Bildung des zentralen Schwenklagers (25) auf.

Figur 5 bis 7, 12 und 13 verdeutlichen die Ausbildung des Unterzugs (29). Der Unterzug (29) weist einen Stützarm (30) auf, der sich in Chassislängsrichtung unterhalb des Achskörpers (12) und unterhalb der Ausnehmungen (26,27) erstreckt. Er überspannt dabei den Trägerausschnitt (15). Der bevorzugt flache und im Querschnitt rechteckige Stützarm (34) kann eine mehrfach abgekantete Form haben. Er ist an seinen Enden jeweils mit dem Längsträger (14) bzw. dem vorderen und hinteren Längsträgerabschnitt (16,17) durch eine Bolzenverbindung (28), bevorzugt eine Schraubverbindung, verbunden. Die Befestigung erfolgt an den unteren Querstegen (22). Der Stützarm (30) schützt den Achskörper (12) von unten und bietet genügend Freiraum für dessen Schwenkbewegungen. Andererseits bildet der Stützarm (30) einen Zuganker zur mechanischen Verbindung und verformungsfesten Stabilisierung des Längsträgers (14) bzw. der Längsträgerabschnitte im Bereich unterhalb des Trägerausschnitts (15).

Der Unterzug (29) kann ferner eine aufrechte Stützplatte (31) mit einer Ausnehmung (32) aufweisen, die ebenfalls den Achskörper (12) im Bereich des Trägerausschnitts (15) überspannt und untergreift. Die Stützplatte (31) ist beidseits des Trägerausschnitts (15) an dem Längsträger (14) bzw. seinen Längsträgerabschnitten (16,17) befestigt. Die Befestigung erfolgt bevorzugt in Planlage an deren Außenseite, insbesondere an deren Mittelstegen und über die besagte Bolzenverbindung (28), vorzugsweise Schraubverbindung. Hierbei weisen die flanschartigen Enden der Stützplatte (31), die Mittelstege (20) und ein oder beide Seitenwände des Achsbocks (23) fluchtende Lochbilder auf.

Der Unterzug (29) kann als einstückiger Stützbügel ausgebildet sein, wobei der Stützarm (30) und die Stützplatte (31) miteinander fest verbunden sind, z.B. durch eine Schweißnaht. Alternativ kann der Unterzug (29) mehrstückig ausgebildet sein, wobei Stützarm (30) und Stützplatte (31) voneinander getrennt angeordnet sind. Der Unterzug (29) ist vorzugsweise als Blechteil aus Metall, insbesondere Stahl, ausgebildet.

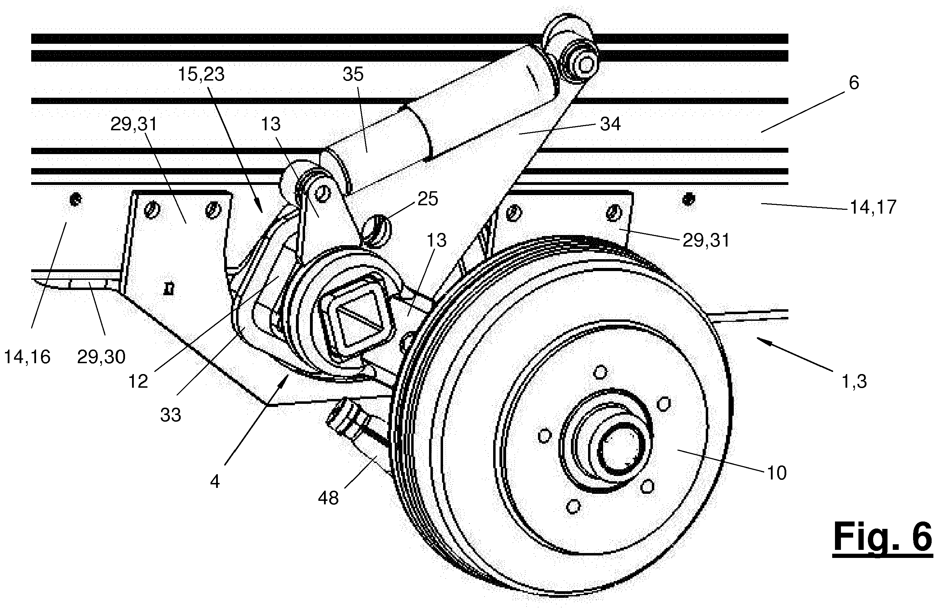

Zum Heben und Senken des Chassis (3) und des Aufbaus (5) wird der Achskörper (12) in der vorerwähnten Weise um die Schwenklager (25) an den Achsböcken (23) gedreht. Dabei drehen die Radschwinghebel (13) und die Stützarme (34) nebst Stoßdämpfer (35) mit. In der angehobenen Fahrstellung nehmen die Radschwinghebel (13) gemäß Figur 6 eine schräg abwärts gerichtete Lage ein. In der Absenkstellung gemäß Figur 11, 12 und 13 ragen sie schräg nach oben, wodurch der Achskörper (12) mitsamt Chassis (3) und Aufbau (5) gegenüber den Fahrzeugrädern (10) abgesenkt wird. Bei ausgefahrenem frontseitigem Stützrad können Chassis (3) und Aufbau (5) dabei eine Schräglage mit heckseitigem Untergrundkontakt einnehmen. Das Chassis (3) kann außerdem mit dem Unterzug (29) auf dem Untergrund aufliegen.

Die Schwenkachse (4) weist eine Verriegelung (36) auf, mit der der Achskörper (12) in der Schwenklage für die angehobene Fahrstellung fixiert werden kann. Hierfür ist in den Achsböcken (23), insbesondere in dem kastenförmig geschlossen Bereich des Gehäuses (24), jeweils eine Riegelmechanik (38) angeordnet. Sie wirkt mit dem Achshalter (33) zusammen und sperrt dessen Drehbewegung.

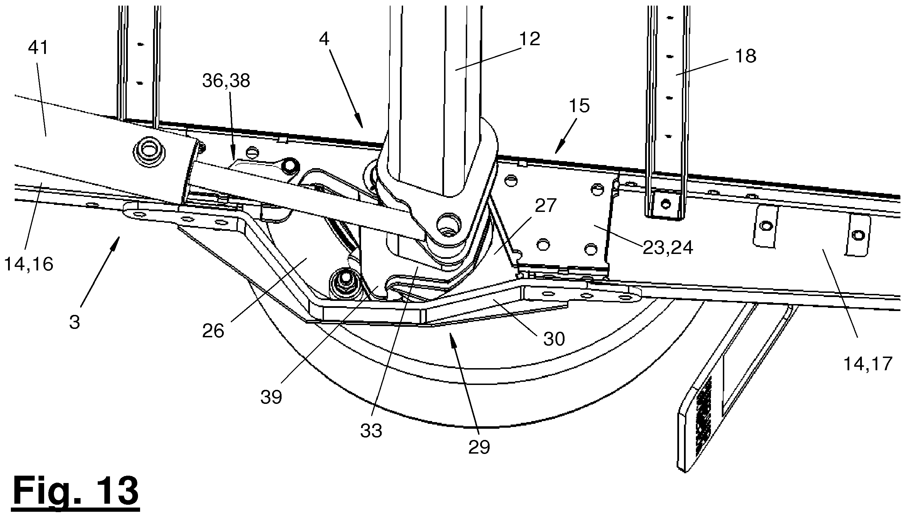

Wie Figur 5, 8 und 13 verdeutlichen, weist der Achshalter (33) einen Anschlag (39) oder Stütznasen auf, die in angehobener Achsenstellung gemäß Figur 8 auf einem Riegelbolzen (nicht dargestellt) aufliegen und eine Drehsperre bilden. In der Senkstellung von Figur 13 liegen die Stütznasen (39) frei. Die Verriegelung (36) weist einen am Chassis (3) angeordneten Riegelzug (37) auf, der z.B. aus einem Betätigungshebel und hieran anschließenden Bowdenzügen besteht, die jeweils mit einem Riegelbolzen verbunden sind und diesen bei Hebelbetätigung gegen die Kraft einer Rückstellfeder zurückziehen können. Der hierdurch freigegebene Achskörper (12) kann sich dann zum Absenken drehen.

Die Schwenkachse (4) weist ferner eine Betätigungseinrichtung (40) zum Anheben aus der Absenkstellung in die Fahrstellung auf. Die Betätigungseinrichtung (40) umfasst z.B. einen Antrieb (41), insbesondere einen bevorzugt hydraulischen Zylinder, der drehend auf den Achskörper (12) einwirkt. Hierfür ist am Achskörper (12) ein Beschlagteil angeordnet, das über ein Verbindungsglied (nicht dargestellt) mit dem Antrieb (41), z.B. mit dem Kolbenstangenende, verbunden ist. Die Betätigungseinrichtung (40) umfasst ferner eine manuell oder motorisch angetriebene Pumpe (42), die mit dem hydraulischen Zylinder (41) verbunden ist. Alternativ kann der Antrieb (41) auch in anderer Weise, z.B. als elektrischer oder sonstiger Stellantrieb mit linearer oder anderer Antriebsbewegung, ausgebildet sein.

Das Chassis (3) und die Schwenkachse (4) können eigenständige Baugruppen des Fahrzeuganhängers (1) sein. Sie können eigenständig produziert, verkauft und verbaut werden. Die Montage kann bei einem Fahrzeughersteller, bei einem Händler oder auch beim Kunden oder bei Servicebetrieben erfolgen.

Das Chassis (3) und die Schwenkachse (4) können Bestandteil eines Baukastensystems sein, wobei die gleiche Schwenkachse (4) für unterschiedlich ausgebildete Chassis (3) eingesetzt werden kann. Hierfür ist die Aufteilung der Längsträger (14) in vordere und hintere Längsträgerabschnitte (16,17) von Vorteil. Durch Einsatz unterschiedlicher Längsträgerabschnitte (16,17) können unterschiedliche Chassislängen und ggf. auch variable Deichsellängen gebildet werden. Die Chassis (3) bzw. die Fahrzeuganhänger (1) können dabei auch unterschiedliche Traglasten haben. Die Schwenkachsenposition in Chassislängsrichtung kann hieran angepasst werden.

In den Ausführungsbeispielen ist ein Fahrzeuganhänger (1) mit einer einzelnen Schwenkachse (4) dargestellt. Alternativ kann ein Chassis (3) bzw. ein Fahrzeuganhänger (1) mehrere, insbesondere zwei, drei oder mehr solcher Schwenkachsen (4) aufweisen. Ferner sind Kombinationen von einer normalen Achse und einer Schwenkachse (4) möglich.

In Variation zu den Ausführungsbeispielen kann ein Längsträger (14) im Achsbereich durchgehend ausgebildet sein und den besagten Trägerausschnitt (15) unterhalb seines oberen Querstegs (21) im Bereich seines Mittelstegs (20) und ggf. seines unteren Querstegs (22) haben. Hierbei können ebenfalls vordere und hintere Längsträgerabschnitte (16,17) entstehen, die im oberen Bereich des Trägerprofils, insbesondere seines oberen Querstegs (21) noch miteinander verbunden sind.

Abwandlungen der gezeigten und beschriebenen Ausführungsformen sind in verschiedener Weise möglich. Insbesondere können die Merkmale der gezeigten Ausführungsbeispiele und ihrer genannten Abwandlungen miteinander kombiniert und insbesondere auch vertauscht werden.

In weiterer Abwandlung kann die Bremseinrichtung (44) entfallen oder in anderer Weise ausgebildet sein. Desgleichen kann die Anhängerkupplung (43) variieren. Statt der gezeigten starren V-Deichsel kann das Chassis (3) und der Fahrzeuganhänger (1) eine andere Deichselform, z.B. eine Rohrdeichsel, aufweisen. Im Weiteren kann ein Längsträger (14) in mehr als zwei Längsträgerabschnitte unterteilt sein. Der Achskörper kann hinsichtlich seiner Form und Erstreckung geändert werden, z.B. zur Bildung von Halbachsen oder Stummelachsen oder einer Schräglenkerachse. Außerdem kann auch die Ausgestaltung des Aufbaus (5) in beliebiger Weise variieren.

### BEZUGSZEICHENLISTE

- 1: Fahrzeuganhänger
- 2: Deichsel
- 3: Chassis
- 4: Schwenkachse
- 5: Aufbau
- 6: Grundrahmen
- 7: Boden
- 8: Gestell, Koffergestell, Planengestell
- 9: Heckteil, Rampe, Heckklappe
- 10: Fahrzeugrad
- 11: Kotflügel
- 12: Achskörper, Achsrohr
- 13: Radschwinghebel
- 14: Längsträger
- 15: Trägerausschnitt
- 16: Längsträgerabschnitt vorn
- 17: Längsträgerabschnitt hinten
- 18: Querträger
- 19: Auflagefläche
- 20: Mittelsteg
- 21: Quersteg oben
- 22: Quersteg unten
- 23: Achsbock
- 24: Gehäuse
- 25: Schwenklager
- 26: Ausnehmung vorn
- 27: Ausnehmung hinten
- 28: Bolzenverbindung, Schraubverbindung
- 29: Unterzug, Stützbügel
- 30: Stützarm
- 31: Stützplatte
- 32: Ausnehmung
- 33: Achshalter
- 34: Stützarm
- 35: Stoßdämpfer
- 36: Verriegelung
- 37: Riegelzug
- 38: Riegelmechanik
- 39: Anschlag, Stütznase
- 40: Betätigungseinrichtung
- 41: Antrieb, Zylinder
- 42: Pumpe
- 43: Anhängerkupplung
- 44: Bremseinrichtung
- 45: Betriebsbremse, Auflaufbremse
- 46: Feststellbremse, Handbremse
- 47: Bremszug
- 48: Bremsanschluss an Radbremse

## Patentansprüche

1. Schwenkachse für einen absenkbaren Fahrzeuganhänger (1), der ein Chassis (3) mit Längsträgern (14) aufweist, wobei die Schwenkachse (4) einen Achskörper (12) mit Achsböcken (23) zur Befestigung am Chassis (3) aufweist, wobei die Achsböcke (23) für eine Bolzenverbindung (28), insbesondere Schraubverbindung, mit den Längsträgern (14) vorgesehen und ausgebildet sind, **dadurch gekennzeichnet, dass** die Schwenkachse (4) einen Unterzug (29) aufweist, der den Achskörper (12) und den Achsbock (23) untergreift und der zur Befestigung am Längsträger (14) vorgesehen und ausgebildet ist.

2. Schwenkachse nach Anspruch 1, **dadurch gekennzeichnet, dass** die Schwenkachse (4) einen Achskörper (12) mit Radschwinghebeln (13) aufweist, der zwischen einer Fahrstellung und einer Absenkstellung schwenkbar an den Achsböcken (23) gelagert ist, wobei die Schwenkachse (4) eine Verriegelung (36) mit einer im Achsbock (23) angeordneten Riegelmechanik (38) aufweist.

3. Schwenkachse nach Anspruch 1 oder 2, **dadurch gekennzeichnet, dass** der Achsbock (23) ein zentrales Schwenklager (25) für den Achskörper (12), insbesondere dessen Achshalter (33), und beidseits des Schwenklagers (25) nach unten offene Ausnehmungen (26,27) zur Aufnahme des Achskörpers (12) in den Endstellungen der Schwenkachse (4) aufweist.

4. Schwenkachse nach Anspruch 1, 2 oder 3, **dadurch gekennzeichnet, dass** der Unterzug (29) einen Stützarm (30) aufweist, der sich unterhalb des Achsbocks (23) und des Achskörpers (12) erstreckt und am Längsträger (14) bzw. an den Längsträgerabschnitten (16,17), insbesondere an deren Unterseite, befestigbar ist.

5. Chassis für einen absenkbaren Fahrzeuganhänger, wobei das Chassis (3) Längsträger (14) und eine Schwenkachse (4) nach einem der Ansprüche 1 bis 4 aufweist, die mittels Achsböcken (23) am Chassis (3) befestigt ist, wobei die Achsböcke (23) an den Längsträgern (14) jeweils in einem Trägerausschnitt (15) angeordnet und durch eine Bolzenverbindung (28), insbesondere Schraubverbindung, befestigt sind, wobei am Chassis (3) der Unterzug (29) angeordnet ist, der den Trägerausschnitt (15) stützend überspannt und den Achsbock (23) untergreift.

6. Chassis nach Anspruch 5, **dadurch gekennzeichnet, dass** die Schwenkachse (4) einen Achskörper (12) mit Radschwinghebeln (13) aufweist, der zwischen einer Fahrstellung und einer Absenkstellung schwenkbar an den Achsböcken (23) gelagert ist.

7. Chassis nach Anspruch 5 oder 6, **dadurch gekennzeichnet, dass** die Längsträger (14) in einen vorderen und einen hinteren Längsträgerabschnitt (16,17) unterteilt sind, wobei die Längsträgerabschnitte (16,17) am Achsbock (23) durch eine Bolzenverbindung (28), insbesondere Schraubverbindung, befestigt sind.

8. Chassis nach Anspruch 7, **dadurch gekennzeichnet, dass** die vorderen und hinteren Längsträgerabschnitte (16,17) im Achsbereich unter Bildung des Trägerausschnitts (15) voneinander distanziert und durch den Achsbock (23) und den Unterzug (29) miteinander verbunden sind.

9. Chassis nach Anspruch 7 oder 8, **dadurch gekennzeichnet, dass** die Längsträger (14) bzw. die Längsträgerabschnitte (16,17) als abgekantete Trägerprofile ausgebildet sind, die den Achsbock (23) beidseits des Trägerausschnitts (15) in einer Profilöffnung aufnehmen und an mehreren Seiten umschließen.

10. Chassis nach einem der Ansprüche 5 bis 9, **dadurch gekennzeichnet, dass** der Achsbock (23) ein kastenförmiges, hohles Gehäuse (24) aufweist.

11. Chassis nach einem der Ansprüche 5 bis 10, **dadurch gekennzeichnet, dass** der Achsbock (23) ein zentrales Schwenklager (25) für den Achskörper (12), insbesondere dessen Achshalter (33), und beidseits des Schwenklagers (25) nach unten offene Ausnehmungen (26,27) zur Aufnahme des Achskörpers (12) in den Endstellungen der Schwenkachse (4) aufweist.

12. Chassis nach einem der Ansprüche 5 bis 11, **dadurch gekennzeichnet, dass** die Schwenkachse (4) eine Verriegelung (36) mit einer im Achsbock (23) angeordneten Riegelmechanik (38) aufweist.

13. Chassis nach einem der Ansprüche 5 bis 12, **dadurch gekennzeichnet, dass** der Unterzug (29) einen Stützarm (30) aufweist, der sich unterhalb des Achsbocks (23) und des Achskörpers (12) erstreckt und am Längsträger (14) bzw. an den Längsträgerabschnitten (16,17), insbesondere an deren Unterseite, befestigt ist.

14. Chassis nach einem der Ansprüche 5 bis 13, **dadurch gekennzeichnet, dass** das Chassis (3) eine ebene Auflagefläche (19) für einen Aufbau (5), insbesondere für dessen Grundrahmen (6), aufweist, die von der Oberseite der Längsträger (14), insbesondere von deren oberen Querstegen (21), gebildet wird.

15. Absenkbarer Fahrzeuganhänger mit einem Chassis (3), wobei das Chassis (3) Längsträger (14) und eine Schwenkachse (4) aufweist, die mittels Achsböcken (23) am Chassis (3) befestigt ist, **dadurch gekennzeichnet, dass** das Chassis (3) nach mindestens einem der Ansprüche 5 bis 14 ausgebildet ist.

## Claims

1. Swivel axle for a lowerable vehicle trailer (1) which has a chassis (3) with longitudinal members (14), wherein the swivel axle (4) has an axle body (12) with axle blocks (23) for fastening to the chassis (3), wherein the axle blocks (23) are provided and designed for a bolt connection (28), in particular screw connection, to the longitudinal members (14), **characterized in that** the swivel axle (4) has an understructure (29) which reaches below the axle body (12) and the axle block (23) and which is provided and designed for fastening to the longitudinal member (14).

2. Swivel axle according to Claim 1, **characterized in that** the swivel axle (4) has an axle body (12) with oscillating wheel levers (13), said axle body being mounted on the axle blocks (23) so as to be able to be swivelled between a driving position and a lowered position, wherein the swivel axle (4) has a lock (36) with a locking mechanism (38) arranged in the axle block (23).

3. Swivel axle according to Claim 1 or 2, **characterized in that** the axle block (23) has a central swivel bearing (25) for the axle body (12), in particular for the axle holder (33) thereof, and downwardly open recesses (26, 27) on both sides of the swivel bearing (25) for receiving the axle body (12) in the end positions of the swivel axle (4).

4. Swivel axle according to Claim 1, 2 or 3, **characterized in that** the understructure (29) has a supporting arm (30) which extends below the axle block (23) and the axle body (12) and is fastenable to the longitudinal member (14) or to the longitudinal member portions (16, 17), in particular to the lower side thereof.

5. Chassis for a lowerable vehicle trailer, wherein the chassis (3) has longitudinal members (14) and a swivel axle (4) according to one of Claims 1 to 4, which swivel axle is fastened to the chassis (3) by means of axle blocks (23), wherein the axle blocks (23) are each arranged on the longitudinal members (14) in a member cutout (15) and are fastened by a bolt connection (28), in particular screw connection, wherein the understructure (29) which spans the member cutout (15) in a supporting manner and reaches below the axle block (23) is arranged on the chassis (3).

6. Chassis according to Claim 5, **characterized in that** the swivel axle (4) has an axle body (12) with oscillating wheel levers (13), said axle body being mounted on the axle blocks (23) so as to be able to be swivelled between a driving position and a lowered position.

7. Chassis according to Claim 5 or 6, **characterized in that** the longitudinal members (14) are divided into a front and a rear longitudinal member portion (16, 17), wherein the longitudinal member portions (16, 17) are fastened to the axle block (23) by a bolt connection (28), in particular screw connection.

8. Chassis according to Claim 7, **characterized in that** the front and rear longitudinal member portions (16, 17) are spaced apart from each other in the axle region, thereby forming the member cutout (15), and are connected to each other by the axle block (23) and the understructure (29).

9. Chassis according to Claim 7 or 8, **characterized in that** the longitudinal members (14) or the longitudinal member portions (16, 17) are designed as chamfered member profiles which receive the axle block (23) in a profile opening on both sides of the member cutout (15) and surround said axle block on a plurality of sides.

10. Chassis according to one of Claims 5 to 9, **characterized in that** the axle block (23) has a box-shaped hollow housing (24).

11. Chassis according to one of Claims 5 to 10, **characterized in that** the axle block (23) has a central swivel bearing (25) for the axle body (12), in particular the axle holder (33) thereof, and downwardly open recesses (26, 27) on both sides of the swivel bearing (25) for receiving the axle body (12) in the end positions of the swivel axle (4).

12. Chassis according to one of Claims 5 to 11, **characterized in that** the swivel axle (4) has a lock (36) with a locking mechanism (38) arranged in the axle block (23).

13. Chassis according to one of Claims 5 to 12, **characterized in that** the understructure (29) has a supporting arm (30) which extends below the axle block (23) and the axle body (12) and is fastened to the longitudinal member (14) or to the longitudinal member portions (16, 17), in particular to the lower side thereof.

14. Chassis according to one of Claims 5 to 13, **characterized in that** the chassis (3) has a flat supporting surface (19) for a body (5), in particular for the basic frame (6) thereof, said supporting surface being formed by the upper side of the longitudinal members (14), in particular by the upper transverse webs (21) thereof.

15. Lowerable vehicle trailer with a chassis (3), wherein the chassis (3) has longitudinal members (14) and a swivel axle (4) which is fastened to the chassis (3) by means of axle blocks (23), **characterized in that** the chassis (3) is designed according to at least one of Claims 5 to 14.

## Revendications

1. Axe de pivotement pour une remorque de véhicule abaissable (1), qui présente un châssis (3) avec des longerons (14), dans lequel l'axe de pivotement (4) présente un corps d'axe (12) avec des supports d'axe (23) pour la fixation au châssis (3), dans lequel les supports d'axe (23) sont prévus et configurés pour un assemblage par boulons (28), en particulier un assemblage par vis, avec les longerons (14), **caractérisé en ce que** l'axe de pivotement (4) présente une plaque inférieure (29) qui saisit par-dessous le corps d'axe (12) et le support d'axe (23) et qui est prévue et configurée pour la fixation au longeron (14).

2. Axe de pivotement selon la revendication 1, **caractérisé en ce que** l'axe de pivotement (4) présente un corps d'axe (12) avec des leviers d'oscillation de roue (13), qui sont montés sur les supports d'axe (23) de façon pivotante entre une position de roulage et une position abaissée, dans lequel l'axe de pivotement (4) présente un verrouillage (36) avec un mécanisme de verrou (38) disposé dans le support d'axe (23).

3. Axe de pivotement selon une revendication 1 ou 2, **caractérisé en ce que** le support d'axe (23) présente un palier de pivotement central (25) pour le corps d'axe (12), en particulier son soutien d'axe (33), et de part et d'autre du palier de pivotement (25) des évidements ouverts vers le bas (26, 27) destinés à recevoir le corps d'axe (12) dans les positions d'extrémité de l'axe de pivotement (4).

4. Axe de pivotement selon une revendication 1, 2 ou 3, **caractérisé en ce que** la plaque inférieure (29) présente un bras de soutien (30), qui s'étend en dessous du support d'axe (23) et du corps d'axe (12) et qui peut être fixé au longeron (14) ou aux parties de longeron (16, 17), en particulier à leur côté inférieur.

5. Châssis pour une remorque de véhicule abaissable, dans lequel le châssis (3) présente des longerons (14) et un axe de pivotement (4) selon l'une quelconque des revendications 1 à 4, qui est fixé au châssis (3) au moyen de supports d'axe (23), dans lequel les supports d'axe (23) sont disposés chacun sur les longerons (14) dans un intervalle de support (15) et sont fixés par un assemblage par boulons (28), en particulier un assemblage par vis, dans lequel la plaque inférieure (29) est disposée sur le châssis (3), et enjambe en position de soutien l'intervalle de support (15) et saisit par-dessous le support de palier (23).

6. Châssis selon la revendication 5, **caractérisé en ce que** l'axe de pivotement (4) présente un corps d'axe (12) avec des leviers d'oscillation de roue (13), qui sont montés sur les supports d'axe (23) de façon pivotante entre une position de roulage et une position abaissée.

7. Châssis selon une revendication 5 ou 6, **caractérisé en ce que** les longerons (14) sont divisés en des parties de longeron avant et arrière (16, 17), dans lequel les parties de longeron (16, 17) sont fixées au support d'axe (23) par un assemblage par boulons (28), en particulier par un assemblage par vis.

8. Châssis selon la revendication 7, **caractérisé en ce que** les parties de longeron avant et arrière (16, 17) sont espacées l'une de l'autre dans la région de l'axe en formant l'intervalle de support (15) et sont reliées l'une à l'autre par le support d'axe (23) et la plaque inférieure (29) .

9. Châssis selon une revendication 7 ou 8, **caractérisé en ce que** les longerons (14) ou les parties de longeron (16, 17) sont formés par des profilés porteurs coudés, qui accueillent le support d'axe (23) de part et d'autre de l'intervalle de support (15) dans une ouverture du profilé et l'entourent sur plusieurs côtés.

10. Châssis selon l'une quelconque des revendications 5 à 9, **caractérisé en ce que** le support d'axe (23) présente un boîtier creux en forme de caisson (24).

11. Châssis selon l'une quelconque des revendications 5 à 10, **caractérisé en ce que** le support d'axe (23) présente un palier de pivotement central (25) pour le corps d'axe (12), en particulier son soutien d'axe (33), et de part et d'autre du palier de pivotement (25) des évidements ouverts vers le bas (26, 27) destinés à recevoir le corps d'axe (12) dans les positions d'extrémité de l'axe de pivotement (4).

12. Châssis selon l'une quelconque des revendications 5 à 11, **caractérisé en ce que** l'axe de pivotement (4) présente un verrouillage (36) avec un mécanisme de verrou (38) disposé dans le support d'axe (23).

13. Châssis selon l'une quelconque des revendications 5 à 12, **caractérisé en ce que** la plaque inférieure (29) présente un bras de soutien (30), qui s'étend en dessous du support d'axe (23) et du corps d'axe (12) et qui peut être fixé au longeron (14) ou aux parties de longeron (16, 17), en particulier à leur côté inférieur.

14. Châssis selon l'une quelconque des revendications 5 à 13, **caractérisé en ce que** le châssis (3) présente une face d'appui plane (19) pour une superstructure (5), en particulier pour le cadre de base (6) de celle-ci, qui est formée par le côté supérieur des longerons (14), en particulier par leurs ailes transversales supérieures (21).

15. Remorque de véhicule abaissable avec un châssis (3), dans laquelle le châssis (3) présente des longerons (14) et un axe de pivotement (4), qui est fixé au châssis (3) au moyen de supports d'axe (23), **caractérisée en ce que** le châssis (3) est réalisé selon au moins une des revendications 5 à 14.
